# FASCICULE DE BREVET EUROPEEN

(11) **EP 1 423 621 B1**
(45) Date de publication et mention de la délivrance du brevet: **17.08.2005**
(21) Numéro de dépôt: 02797998.8
(22) Date de dépôt: 06.09.2002
(51) Int. Cl.: F16C 33/61, F16C 19/16, F16C 25/08

(54) **PALIER A ROULEMENT POUR COLONNE DE DIRECTION**
WÄLZLAGER FÜR LENKSÄULE
ANTIFRICTION BEARING FOR A STEERING COLUMN

(30) Priorité: 07.09.2001 FR 0111626; 18.12.2001 FR 0116403
(43) Date de publication de la demande: 02.06.2004
(73) Titulaire: Aktiebolaget SKF, 415 50 Göteborg (SE)
(72) Inventeur: DELOS, Jacques, F-77500 Chelles (FR); MONTBOEUF, Bruno, F-37540 Saint Cyr sur Loire (FR); BUSSIT, Sylvain, F-37100 Tours (FR)
(74) Mandataire: Casalonga, Axel
(86) Numéro de dépôt international: PCT/FR2002/003029
(87) Numéro de publication internationale: WO 2003/023242

(56) Documents cités:
- EP-A- 0 356 882
- DE-A- 3 108 658
- DE-A- 19 922 914
- FR-A- 2 669 690
- GB-A- 1 007 191
- US-A- 5 106 207
- US-A- 5 193 917
- US-A- 5 845 998

## Description

L'invention concerne le domaine des paliers à roulement, notamment pour colonnes de direction.

Le document FR-A-2 669 690 décrit un roulement comprenant une bague extérieure à section en U, une bague intérieure à section en U, un élément élastique disposé dans la bague extérieure, et quatre fils en acier traité, dont deux sont disposés dans la bague intérieure dans les zones de raccordement entre ses parties axiales et radiales et deux dans l'alésage de l'élément élastique, et des éléments roulants tels que des billes disposées au contact des fils qui constituent les chemins de roulement des éléments roulants. Les fils se présentent sous la forme de joncs annulaires dont les extrémités viennent bout à bout quand ils sont en place. Les éléments roulants peuvent être jointifs dans le sens circonférentiel ou être espacés régulièrement l'un de l'autre au moyen d'une cage. L'élément élastique présente une forme annulaire à section en L avec une portion axiale en contact avec une portion axiale de la bague extérieure et une portion radiale en contact avec une portion radiale de la bague extérieure. Des crochets sont formés à l'extrémité libre de la portion axiale de l'élément élastique, du côté intérieur et assurent la retenue axiale d'une rondelle consistant en un élément annulaire tronconique. La rondelle comprend un bord intérieur en contact avec l'autre portion axiale de la bague extérieure et orienté axialement du côté opposé aux éléments roulants et un bord extérieur en contact avec l'un des quatre fils et avec les crochets de l'élément élastique, et orienté axialement du côté des éléments roulants.

Pour monter un tel roulement, on forme une unité comprenant la bague intérieure, les fils, les corps roulants, la rondelle, et l'élément élastique. Puis on monte cette unité dans une bague extérieure dont l'une des portions radiales n'est pas encore formée et est donc à section en L, puis on rabat la bague extérieure pour former ladite portion radiale.

On réalise ainsi un roulement à quatre points de contact capable de fonctionner aussi bien sous charge axiale que sous charge radiale ou sous charge combinée.

De tels roulements sont fréquemment utilisés dans les colonnes de direction qui s'accommodent de roulements dont la précision dimensionnelle et fonctionnelle n'a pas besoin d'être très élevée. Afin que le roulement puisse fonctionner sans jeu avec une précontrainte calibrée, on dispose une rondelle de précontrainte conique entre l'une des portions radiales de la bague extérieure et le jonc correspondant. À l'état non comprimé, la rondelle présente un profil tronconique dont le sommet de cône est dirigé dans une direction opposée aux billes. Quand on vient former le dernier bord radial de l'enveloppe extérieure, on comprime la rondelle qui présente initialement une forme légèrement conique en forme de chapeau de chinois. La rondelle tend alors à prendre une forme plate, le sommet du cône se rapprochant des billes. L'effort axial exercé par la rondelle crée ainsi un effort de précontrainte entre les billes et les joncs d'une part, entre les joncs et les enveloppes d'autre part, rattrapant ainsi tous les jeux résiduels entre ces éléments.

Or, la rondelle est un élément bistable, c'est-à-dire possédant deux positions d'équilibre, le passage d'une position d'équilibre à l'autre se faisant par le passage d'un état d'équilibre instable dans lequel la rondelle présente une forme plate. C'est ainsi que, si pour des raisons d'effort de précontrainte et d'encombrement, on est amené à donner à ladite rondelle une forme presque plate à l'état précontraint, peut se produire un retournement de la rondelle de précontrainte sur elle-même, sous certaines conditions, telles que chocs, sertissage trop prononcé de l'enveloppe, etc. La rondelle prend alors sa deuxième position de stabilité avec un profil tronconique dont le sommet est dirigé vers les billes. Dans cette position, la rondelle est inapte à exercer sa fonction de précontrainte, son extrémité la plus proche des billes n'étant plus celle qui exerce une force axiale sur l'un des fils du roulement.

De plus, pour monter la rondelle sur l'élément élastique, on appuie axialement sur ladite rondelle avec le risque qu'elle se retourne, le risque étant d'autant plus élevé que la rondelle décrite par le document précité est mince.

L'invention se propose de remédier aux inconvénients décrits ci-dessus.

L'invention propose un palier à roulement équipé d'un élément de précontrainte économique et compact.

Le dispositif de roulement à pistes rapportées, selon un aspect de l'invention, est du type comprenant une bague extérieure et une bague intérieure munies chacune d'un chemin de roulement pour des éléments roulants disposés au contact desdits chemins de roulement, au moins l'une des bagues comprenant une enveloppe annulaire sur laquelle sont montés deux fils formant un chemin de roulement pour les éléments roulants et une rondelle de précontrainte montée axialement entre une portion radiale de l'enveloppe et l'un des fils. Ledit fil est en contact avec l'alésage d'une portion axiale de l'enveloppe, un autre fil étant également en contact avec l'alésage de ladite portion axiale de l'enveloppe. L'enveloppe est monobloc.

Dans un premier mode de réalisation de l'invention, la rondelle consiste en un élément annulaire tronconique à l'état libre et ouvert dans sa partie centrale. Une telle rondelle Belleville est particulièrement économique.

Toutefois, une rondelle Belleville présentant un profil conique très plat et donc peu de dissymétrie axiale, est très difficile à orienter automatiquement au moyen d'un bol vibrant en vue d'un assemblage automatisé du roulement. Il existe donc un risque non négligeable de monter à l'envers des rondelles de précontrainte dans le roulement.

Dans un second mode de réalisation de l'invention, la rondelle de précontrainte comprend une portion tronconique à l'état libre et un rebord axial s'étendant vers l'extérieur du roulement. Le rebord axial empêche un éventuel retournement de la portion tronconique qui possède un seul état stable. Une telle rondelle est très aisée à orienter automatiquement dans une chaîne de montage ce qui réduit le risque de montage à l'envers et inapte à un éventuel retournement, tout en restant économique et sans influence néfaste à la compacité du roulement dont les dimensions sont inchangées.

Avantageusement, le rebord axial est circonférentiellement continu et forme l'ouverture centrale de l'élément de précontrainte. Le rebord axial peut s'étendre à partir du bord intérieur de la portion tronconique axialement à l'opposé des éléments roulants.

Avantageusement, le rebord axial est disposé dans un alésage de l'enveloppe extérieure. La rondelle de précontrainte est ainsi facile à centrer par rapport à l'enveloppe extérieure, en faisant simplement passer le rebord axial dans ledit alésage.

Dans un mode de réalisation de l'invention, la longueur axiale du rebord axial est inférieure à l'épaisseur de l'enveloppe correspondante, en particulier à l'épaisseur de la portion radiale de l'enveloppe avec laquelle le rebord axial est en contact. On conserve ainsi les dimensions extérieures du roulement sans modifier son encombrement.

Dans un mode de réalisation de l'invention, le rebord axial présente un diamètre légèrement inférieur à celui d'un alésage de l'enveloppe extérieure avec lequel il est apte à coopérer.

Dans un mode de réalisation de l'invention, la portion tronconique est en contact avec l'un des fils et avec une paroi radiale de l'enveloppe extérieure. Le bord extérieur de la portion tronconique peut être en contact avec ledit fil, tandis que le bord intérieur est en contact avec ladite paroi radiale.

Dans un mode de réalisation de l'invention, la portion tronconique est susceptible de présenter, à l'état monté, un angle au sommet du cône variant de 160 à 180° par rapport à un plan radial. À l'état libre, la portion tronconique pourra présenter un angle au sommet du cône de l'ordre de 140 à 170°.

Avantageusement, la portion tronconique est circonférentiellement continue.

Dans un mode de réalisation de l'invention, chaque enveloppe est annulaire, en section en U. Chaque enveloppe comprend une portion axiale à partir de chaque bord de laquelle s'étendent deux portions radiales dirigées vers l'extérieur pour l'enveloppe intérieure et vers l'intérieur pour l'enveloppe extérieure. L'enveloppe intérieure peut être symétrique par rapport à un plan passant par le centre des éléments roulants. L'enveloppe extérieure peut être pourvue d'une portion radiale d'épaisseur plus faible que la portion axiale et que l'autre portion radiale pour faciliter son pliage après l'insertion du quatrième fil.

En d'autres termes, on prévoit un roulement à pistes rapportées, comprenant une première enveloppe, une deuxième enveloppe, quatre fils montés en contact avec les enveloppes, une rangée d'éléments roulants disposés entre les fils, et une rondelle de précontrainte qui comprend une portion tronconique à l'état libre et, du côté de son alésage, un rebord axial s'étendant vers l'extérieur du roulement.

Ainsi, dans un mode de réalisation de l'invention, le dispositif comprend quatre fils montés en contact avec les enveloppes, les éléments roulants étant disposés au contact des fils.

Dans un autre mode de réalisation de l'invention, le dispositif comprend deux fils en contact avec la deuxième enveloppe et une bague massive comprenant un chemin de roulement pour les éléments roulants.

L'invention propose également une colonne de direction comprenant un arbre et deux roulements montés sur l'arbre. Au moins l'un des roulements comprend une bague extérieure et une bague intérieure munies chacune d'un chemin de roulement, des éléments roulants disposés au contact desdits chemins de roulement, au moins l'une des bagues comprenant une enveloppe annulaire sur laquelle sont montés deux fils formant un chemin de roulement pour les éléments roulants et une rondelle de précontrainte montée axialement entre une portion radiale de l'enveloppe et l'un des fils. Ledit fil est en contact avec l'alésage d'une portion axiale de l'enveloppe, un autre fil étant également en contact avec l'alésage de ladite portion axiale de l'enveloppe. L'enreloppe est monobloc.

La présente invention sera mieux comprise à l'étude de la description détaillée d'un mode de réalisation pris à titre d'exemple nullement limitatif et illustré par les dessins annexés, sur lesquels :
- la figure 1 est une demi-vue en coupe axiale d'un palier à roulement selon un premier mode de réalisation de l'invention;
- la figure 2 est une vue en coupe axiale d'un palier à roulement selon un second mode de réalisation de l'invention, monté dans un ensemble mécanique;
- la figure 3 est une demi-vue en coupe axiale du palier à roulement de la figure 2;
- la figure 4 est une vue correspondant à la figure 3 du roulement en cours de fabrication; et
- la figure 5 est demi-vue en coupe axiale d'un palier à roulement selon un troisième mode de réalisation de l'invention.

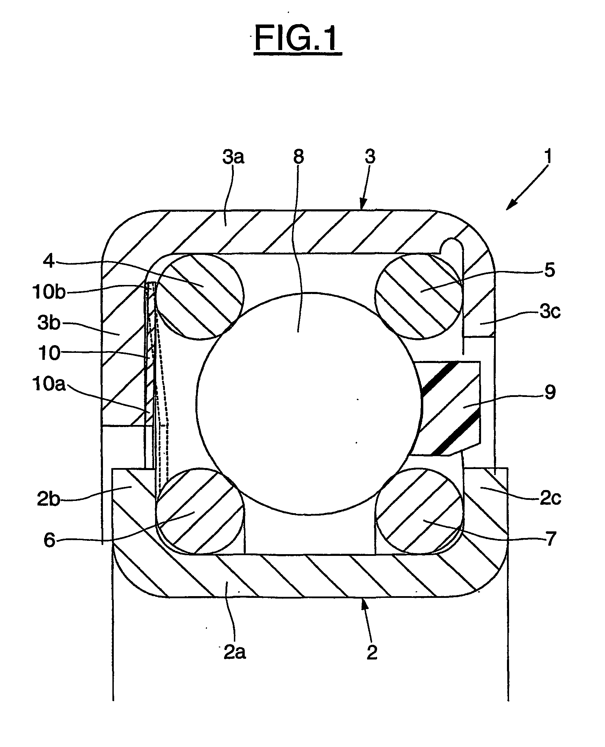

Comme on peut le voir sur la figure 1, le roulement 1 comprend une enveloppe intérieure 2, une enveloppe extérieure 3, quatre fils 4, 5, 6 et 7, une rangée d'éléments roulants 8, une cage 9 et une rondelle de type Belleville 10. L'enveloppe intérieure 2 comprend une portion axiale 2a se prolongeant à chacune de ses extrémités axiales par une portion radiale 2b, 2c. Les portions radiales 2b et 2c sont identiques. L'enveloppe intérieure 2 présente donc une forme annulaire à section en U.

L'enveloppe extérieure 3 présente également une forme annulaire à section en U avec une portion axiale 3a, une paroi radiale 3b et une paroi radiale 3c. La paroi radiale 3c présente une épaisseur inférieure à l'épaisseur de la portion axiale 3a et de la portion radiale 3b et une longueur, dans le sens radial, inférieure à la longueur de la portion radiale 3b. En d'autres termes, l'espace séparant les portions radiales 2c et 3c est supérieur à celui séparant les portions radiales 2b et 3b.

Les fils 4 et 5 sont disposés dans l'enveloppe extérieure, tandis que les fils 6 et 7 sont disposés dans l'enveloppe intérieure. Le fil 4 est disposé en contact avec la portion axiale 3a et à proximité de la portion radiale 3b. Le fil 5 est disposé en contact avec la portion axiale 3a et avec la paroi radiale 3c. Le fil 6 est disposé en contact avec la portion axiale 2a et la portion axiale 2b. Le fil 7 est disposé en contact avec la portion axiale 2a et la paroi radiale 2c. Les éléments roulants 8, ici des billes, sont disposés entre les fils 4, 5, 6 et 7, en contact avec chacun d'eux et sont maintenus espacés circonférentiellement par la cage 9, les fils formant des chemins de roulement pour les éléments roulants 8.

Chaque sous-ensemble, enveloppe extérieure 3 et fils 4, 5 d'une part, enveloppe intérieure 2 et fils 6, 7 d'autre part, forme ainsi respectivement une bague extérieure et une bague intérieure pouvant tourner l'une par rapport à l'autre grâce aux éléments roulants 8 disposés entre lesdites bagues.

Pour des raisons d'économie et de résistance mécanique, les enveloppes 2 et 3, les fils 4 à 7 et les éléments roulants 8 sont généralement réalisés en acier de nuances appropriées. Les enveloppes 2 et 3 sont chacune monoblocs et réalisées par pliage ou emboutissage de tôle.

La rondelle Belleville 10 est disposée axialement entre la paroi radiale 3b de l'enveloppe extérieure 3 et le fil 4. À l'état normal, illustré en trait fort, la rondelle Belleville voit son bord intérieur 10a en contact avec l'extrémité libre de la portion axiale 3b et son bord extérieur 10b en contact avec le fil 4 sur lequel il exerce un effort axial qui permet de supprimer l'éventuel jeu entre les éléments roulants 8 et les fils 4 à 7.

Par rapport aux dispositifs de l'art antérieur, ce dispositif de roulement précontraint présente des avantages sur le plan de la compacité.

Toutefois, comme on l'a dit plus haut, la rondelle Belleville est susceptible de se retourner ou d'être montée à l'envers et présente la disposition illustrée en traits pointillés. Le bord intérieur 10a est alors espacé de l'extrémité libre de la portion radiale 3b, tandis que le bord extérieur 10b est en contact avec la portion radiale 3b et n'exerce de par cette position aucune contrainte axiale sur le fil 4.

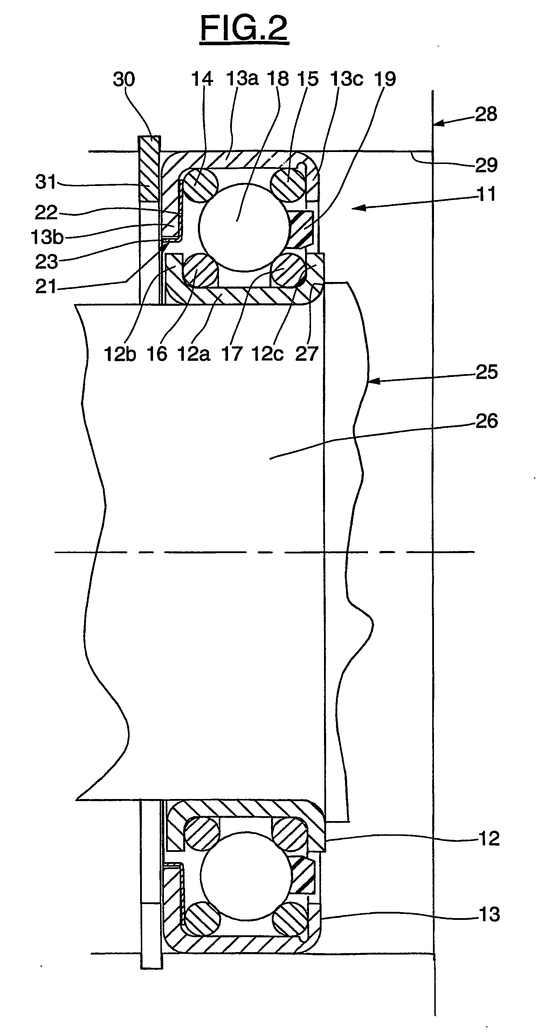

Sur les figures 2 à 4, les références des éléments semblables à ceux de la figure 1 ont été augmentées du nombre 10. La rondelle Belleville est ici remplacée par un élément de précontrainte axiale 21 pourvu d'une portion tronconique 22 et d'un rebord axial 23 formant l'ouverture centrale de l'élément de précontrainte. Le rebord axial 23 est de longueur axiale inférieure ou égale à l'épaisseur de la portion radiale 13b de l'enveloppe extérieure 13 et est disposé dans l'alésage de ladite portion radiale 13b. Pour un montage aisé, le diamètre du rebord axial 23 est très légèrement inférieur au diamètre intérieur de la portion radiale 13b.

La portion tronconique 22 s'étend à partir de l'extrémité du rebord axial 23 située du côté des éléments roulants 18 et est dirigée radialement vers l'extérieur, de façon que son extrémité soit apte à être en contact avec le fil 14. Le bord intérieur 22a de la portion tronconique 22 est en contact avec une surface radiale de la portion radiale 13b proche de son extrémité libre et le bord extérieur 22b est en contact avec le fil 14. L'élément de précontrainte 21 est ainsi en appui sur la portion radiale 13b de l'enveloppe extérieure 13 et vient exercer un effort axial permanent sur le fil 14.

L'élément de précontrainte 21 possède un unique état stable grâce à la présence du rebord axial 23 qui se raccorde sur le bord intérieur 22a de la portion tronconique 22. En outre, l'élément de précontrainte 21 étant fortement dissymétrique dans le sens axial, son orientation peut être réalisée facilement par un bol vibrant, ce qui permet ensuite de le positionner dans un sens déterminé dans l'enveloppe extérieure 13.

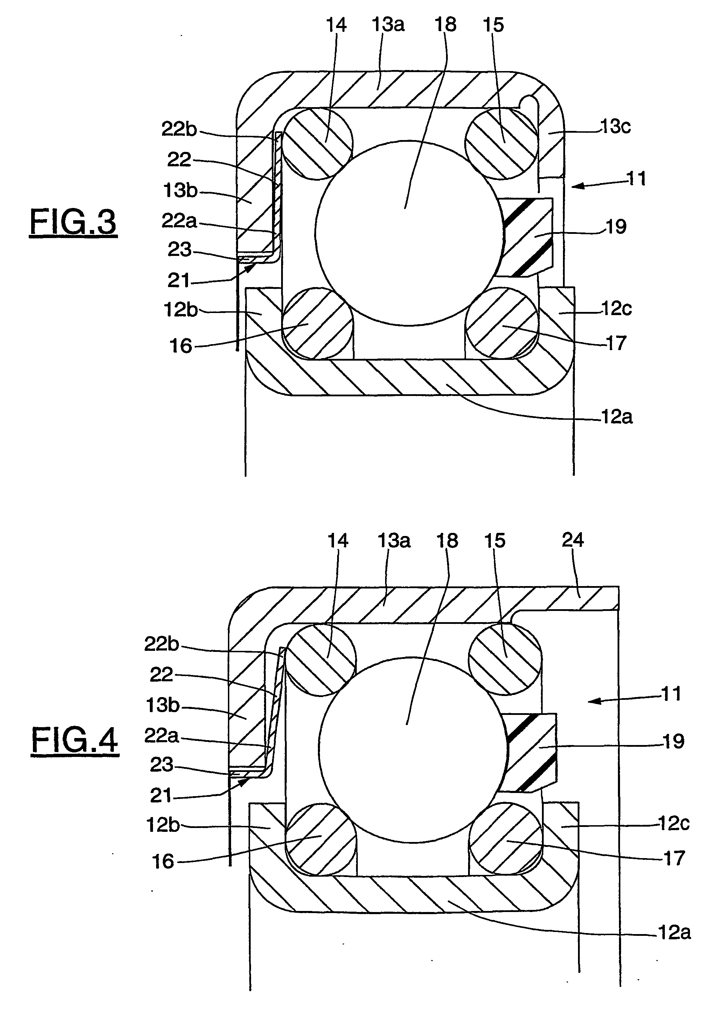

Sur la figure 4, est illustrée une étape intermédiaire de fabrication dans laquelle les fils 16 et 17 ont déjà été disposés dans l'enveloppe intérieure 12, l'élément de précontrainte 21 et le fil 14 ont été disposés dans l'enveloppe extérieure 13, puis les éléments roulants 18 et leur cage 19 ont été disposés entre les fils 14, 16 et 17, puis on a disposé le fil 15.

L'enveloppe extérieure 13 présente une section en L, avant formation de la portion radiale 13c qui se présente encore sous la forme d'une extension axiale 24 située dans le prolongement de la portion axiale 13a. L'élément de précontrainte 21 est à l'état libre, la portion tronconique présentant un angle avec un plan radial plus élevé qu'à l'état monté illustré sur la figure 3. À partir de l'état illustré sur la figure 4, on procède au pliage de l'extension 24 pour lui conférer une forme radiale et la transformer en portion radiale 13c tout en maintenant la portion radiale 13b et l'enveloppe intérieure 12 et en provoquant l'écrasement partiel de la portion tronconique 22 de l'élément de précontrainte 21.

Comme on le voit sur la figure 2, le roulement 11 est monté sur un arbre 25 pourvu d'une surface extérieure cylindrique 26 et d'un épaulement 27. L'enveloppe intérieure 12 est montée par son alésage sur la surface extérieure cylindrique 26. L'épaulement 27 forme une butée axiale pour le roulement 11. Le roulement 11 est monté dans un logement formé par une pièce 28 pourvue d'un alésage 29 en contact avec la surface extérieure de l'enveloppe extérieure 13, et d'une rainure annulaire 30 formée dans ledit alésage 29 et dans lequel est monté un anneau de retenue-31, par exemple un circlips. L'anneau de retenue 31 est en contact avec la portion radiale 13b de l'enveloppe extérieure 13. Ainsi, le roulement 11 est maintenu axialement dans un sens par l'anneau de retenue 31 et dans l'autre sens par l'épaulement 27 de l'arbre 25.

Un tel roulement est de construction simple, économique, légère, et compacte.

Dans le second mode de réalisation, le rebord axial tubulaire de l'élément de précontrainte augmente la rigidité de la portion tronconique et évite tout retournement accidentel de ladite portion tronconique sur elle-même. On peut ainsi sans danger écraser complètement la rondelle de précontrainte jusqu'à conférer à la portion tronconique une forme plane sans risque de retournement. D'autre part, l'élément de précontrainte présente un profil franchement dissymétrique dans le sens axial. Il est donc très facile d'orienter cette pièce au moyen d'un bol vibrant. On peut ainsi aisément automatiser l'assemblage du roulement et bénéficier de la réduction correspondante de coût de fabrication. On fiabilise le procédé de fabrication en limitant considérablement les risques de montage à l'envers ou de retournement accidentel de la rondelle de précontrainte lors de sa mise en place ou après. Le rebord axial de l'élément de précontrainte favorise son précentrage dans l'enveloppe extérieure, ce qui garantit également un centrage radial relatif correct de la périphérie de la portion tronconique par rapport aux joncs formant le chemin de roulement avec lequel ils coopèrent. Ceci facilite également l'automatisation de l'assemblage des éléments. Enfin, l'encombrement axial du roulement n'est nullement affecté puisque les dimensions axiales du rebord axial de la rondelle sont inférieures ou égales à l'épaisseur de l'enveloppe correspondante.

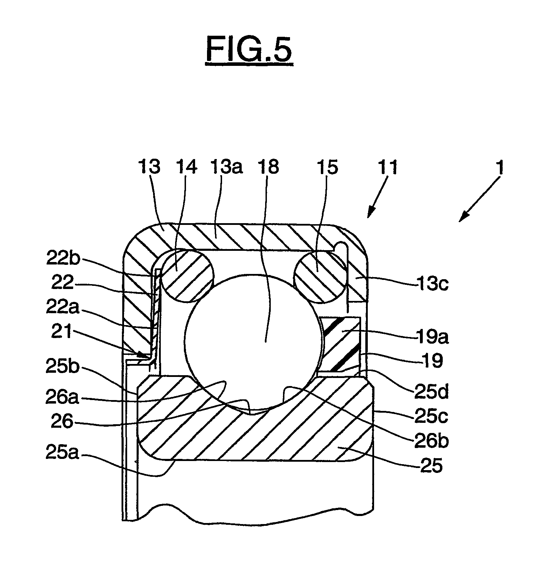

Sur la figure 5, les références des éléments semblables à ceux des figures 2 à 4 ont été conservées. Le roulement 11 comprend une bague -intérieure 25, une enveloppe extérieure 13, deux fils 14, 15, une rangée d'éléments roulants 18, ici des billes, une cage 19 et un élément de précontrainte axiale 21.

La bague intérieure 25 est de type massif et réalisée par usinage avec enlèvement de copeaux. La bague intérieure 25 est généralement monobloc. La bague intérieure 25 comprend une gorge circulaire 26 présentant des génératrices concaves 26a et 26b formant un chemin de roulement. En d'autres termes, en section selon un plan passant par l'axe du roulement, la gorge 26 comprend deux portions concaves adjacentes. La gorge 26 est symétrique par rapport à un plan radial passant par le centre des éléments roulants 18. La bague intérieure 25 peut être disposée dans une enveloppe annulaire, non représentée, de même forme que l'enveloppe 12 des modes de réalisation précédents, ou, au contraire être directement montée sur un arbre ou une pièce équivalente, ladite bague intérieure 25 assurant la retenue axiale des éléments roulants 18.

Lors du montage, on dispose les éléments roulants 18 et la cage 19 sur la gorge 26 de la bague intérieure 25 formant le chemin de roulement, on dispose l'élément de précontrainte 21, le fil 14, le sous ensemble éléments roulants 18 - cage 19 - bague intérieure 25, et le fil 15 dans l'enveloppe 13. Puis, on procède au pliage de la portion radiale 13c initialement axiale pour lui conférer une forme radiale tout en maintenant la portion radiale 13b et en provoquant l'écrasement partiel de la portion tronconique 22 de l'élément de précontrainte 21.

Le rebord axial tubulaire de l'élément de précontrainte augmente la rigidité de la portion tronconique et évite tout retournement accidentel de ladite portion tronconique sur elle-même. On peut ainsi sans danger écraser complètement la rondelle de précontrainte jusqu'à conférer à la portion tronconique une forme plane sans risque de retournement. D'autre part, l'élément de précontrainte présente un profil franchement dissymétrique dans le sens axial. Il est donc très facile d'orienter cette pièce au moyen d'un bol vibrant. On peut ainsi aisément automatiser l'assemblage du roulement et bénéficier de la réduction correspondante de coût de fabrication. On fiabilise le procédé de fabrication en limitant considérablement les risques de montage à l'envers ou de retournement accidentel de la rondelle de précontrainte lors de sa mise en place ou après. Le rebord axial de l'élément de précontrainte favorise son précentrage dans l'enveloppe extérieure, ce qui garantit également un centrage radial relatif correct de la périphérie de la portion tronconique par rapport aux joncs formant le chemin de roulement avec lequel ils coopèrent. Ceci facilite également l'automatisation de l'assemblage des éléments. Enfin, l'encombrement axial du roulement n'est nullement affecté puisque les dimensions axiales du rebord axial de la rondelle sont inférieures ou égales à l'épaisseur de l'enveloppe correspondante.

Selon le mode réalisation, le roulement peut comprendre soit une bague massive et une bague comprenant une enveloppe et deux fils, soit deux bagues comprenant une enveloppe et deux fils.

## Revendications

1. Dispositif de roulement comprenant une bague extérieure et une bague intérieure munies chacune d'un chemin de roulement pour des éléments roulants (8,18) disposés au contact desdits chemins de roulement, au moins l'une des bagues comprenant une enveloppe annulaire (2,12,3,13) sur laquelle sont montés deux fils (4,5) formant un chemin de roulement pour les éléments roulants, et une rondelle de précontrainte (10,21) montée axialement entre une portion radiale de l'enveloppe et l'un des fils, **caractérisé en ce que** ledit fil est en contact avec l'alésage d'une portion axiale de l'enveloppe, un autre fil étant également en contact avec l'alésage de ladite portion axiale de l'enveloppe, *l'enveloppe étant monobloc.*

2. Dispositif selon la revendication 1, **caractérisé par le fait que** la rondelle consiste en un élément annulaire (10) tronconique à l'état libre et ouvert dans partie centrale.

3. Dispositif selon la revendication 1, **caractérisé par le fait que** la rondelle comprend une portion tronconique (22) à l'état libre et un rebord axial (23) s'étendant vers l'extérieur du roulement.

4. Dispositif selon la revendication 3, **caractérisé par le fait que** le rebord axial est circonférentiellement continu et forme l'ouverture centrale de l'élément de précontrainte.

5. Dispositif selon la revendication 3 ou 4, **caractérisé par le fait que** le rebord axial est disposé dans un alésage de l'enveloppe extérieure.

6. Dispositif selon l'une quelconque des revendications 3 à 5, **caractérisé par le fait que** la longueur axiale du rebord axial est inférieure à l'épaisseur de l'enveloppe correspondante.

7. Dispositif selon l'une quelconque des revendications 3 à 6, **caractérisé par le fait que** le rebord axial présente un diamètre légèrement inférieur à celui d'un alésage de l'enveloppe extérieure dans lequel il est disposé.

8. Dispositif selon l'une quelconque des revendications précédentes, **caractérisé par le fait que** la portion tronconique (10, 22) est en contact avec l'un des fils (4, 14) et avec une paroi radiale (3b, 13b) de l'enveloppe extérieure (3, 13).

9. Dispositif selon l'une quelconque des revendications précédentes, **caractérisé par le fait que** la portion tronconique est susceptible de présenter un angle au sommet variant de 160° à 180°.

10. Dispositif selon l'une quelconque des revendications précédentes, **caractérisé par le fait que** la portion tronconique est circonférentiellement continue.

11. Dispositif selon l'une quelconque des revendications précédentes, **caractérisé par le fait que** chaque enveloppe annulaire possède une section en U.

12. Dispositif selon l'une quelconque des revendications précédentes, **caractérisé par le fait qu'**il comprend quatre fils montés en contact avec les enveloppes, les éléments roulants étant disposés au contact des fils.

13. Dispositif selon l'une quelconque des revendications 1 à 11, **caractérisé par le fait qu'**il comprend deux fils en contact avec une enveloppe et une bague massive comprenant un chemin de roulement pour les éléments roulants.

14. Colonne de direction comprenant un arbre et deux roulements montés sur l'arbre, au moins l'un des roulements étant selon l'une quelconque des revendications précédentes.

## Claims

1. Antifriction bearing device comprising an outer ring and an inner ring each fitted with a raceway for rolling elements (8, 18) disposed in contact with said raceways, at least one of the rings comprising an annular casing (2, 12, 3, 13) on which are mounted two wires (4, 5) forming a raceway for the rolling elements, and a preload washer (10, 21) mounted axially between a radial portion of the casing and one of the wires, **characterized in that** said wire is in contact with the bore of an axial portion of the casing, another wire also being in contact with the bore of said axial portion of the casing, the casing being a one-piece casing.

2. Device according to Claim 1, **characterized in that** the washer consists in an annular element (10) of truncated cone shape in the free state and open in its central portion.

3. Device according to Claim 1, **characterized in that** the washer comprises a truncated cone shaped portion (22) in the free state and an axial lip (23) extending towards the outside of the bearing.

4. Device according to Claim 3, **characterized in that** the axial lip is circumferentially continuous and forms the central opening of the preload element.

5. Device according to Claim 3 or 4, **characterized in that** the axial lip is disposed in a bore of the outer casing.

6. Device according to any one of Claims 3 to 5, **characterized in that** the axial length of the axial lip is less than the thickness of the corresponding casing.

7. Device according to any one of Claims 3 to 6, **characterized in that** the axial lip exhibits a diameter slightly less than that of a bore of the outer casing in which bore it is disposed.

8. Device according to any one of the preceding claims, **characterized in that** the truncated cone shaped portion (10, 22) is in contact with one of the wires (4, 14) and with a radial wall (3b, 13b) of the outer casing (3, 13).

9. Device according to any one of the preceding claims, **characterized in that** the truncated cone shaped portion is likely to exhibit a vertex angle varying from 160° to 180°.

10. Device according to any one of the preceding claims, **characterized in that** the truncated cone shaped portion is circumferentially continuous.

11. Device according to any one of the preceding claims, **characterized in that** each annular casing has a U section.

12. Device according to any one of the preceding claims, **characterized in that** it comprises four wires mounted in contact with the casings, the rolling elements being disposed in contact with the wires.

13. Device according to any one of Claims 1 to 11, **characterized in that** it comprises two wires in contact with a casing and one solid ring comprising a raceway for the rolling elements.

14. Steering column comprising a shaft and two antifriction bearings mounted on the shaft, at least one of the bearings being according to any one of the preceding claims.

## Patentansprüche

1. Wälzvorrichtung mit einem Außenring und einem Innenring, die jeweils mit einer Laufbahn für Wälzkörper (8, 18) versehen sind, die in Kontakt mit den Wälzbahnen angeordnet sind, wobei mindestens einer der Ringe einen ringförmigen Mantel (2, 12, 3, 13) aufweist, an dem zwei Drähte (4, 5) angebracht sind, die eine Laufbahn für die Wälzkörper bilden, und einer Vorbelastungsscheibe (10, 21), die axial zwischen einem radialen Mantelteil und einem der Drähte angebracht ist, **dadurch gekennzeichnet, dass** der Draht mit der Bohrung eines axialen Mantelteils in Kontakt steht, wobei ein anderer Draht ebenfalls mit der Bohrung des axialen Mantelteils in Kontakt steht, wobei der Mantel einstückig ist.

2. Vorrichtung nach Anspruch 1, **dadurch gekennzeichnet, dass** die Scheibe aus einem kegelstumpfförmigen ringförmigen Element (10) im freien Zustand besteht, das in seinem mittleren Teil offen ist.

3. Vorrichtung nach Anspruch 1, **dadurch gekennzeichnet, dass** die Scheibe einen kegelstumpfförmigen Teil (22) im freien Zustand und einen axialen Rand (23) aufweist, der sich zur Außenseite des Wälzlagers erstreckt.

4. Vorrichtung nach Anspruch 3, **dadurch gekennzeichnet, dass** der axiale Rand um den Umfang durchgehend ist und eine mittlere Öffnung des Vorbelastungselements bildet.

5. Vorrichtung nach Anspruch 3 oder 4, **dadurch gekennzeichnet, dass** der axiale Rand in einer Bohrung des Außenmantels angeordnet ist.

6. Vorrichtung nach einem der Ansprüche 3 bis 5, **dadurch gekennzeichnet, dass** die axiale Länge des axialen Rands geringer ist als die Dicke des entsprechenden Mantels.

7. Vorrichtung nach einem der Ansprüche 3 bis 6, **dadurch gekennzeichnet, dass** der axiale Rand einen Durchmesser aufweist, der etwas kleiner ist als der einer Bohrung des Außenmantels, in der er angeordnet ist.

8. Vorrichtung nach einem der vorhergehenden Ansprüche, **dadurch gekennzeichnet, dass** der kegelstumpfförmige Teil (10, 22) mit einem der Drähte (4, 14) und mit einer radialen Wand (3b, 13b) des Außenmantels (3, 13) in Kontakt steht.

9. Vorrichtung nach einem der vorhergehenden Ansprüche, **dadurch gekennzeichnet, dass** der kegelstumpfförmige Teil einen Scheitelwinkel zwischen 160° und 180° aufweisen kann.

10. Vorrichtung nach einem der vorhergehenden Ansprüche, **dadurch gekennzeichnet, dass** der kegelstumpfförmige Teil um den Umfang durchgehend ist.

11. Vorrichtung nach einem der vorhergehenden Ansprüche, **dadurch gekennzeichnet, dass** jeder ringförmige Mantel einen U-förmigen Querschnitt aufweist.

12. Vorrichtung nach einem der vorhergehenden Ansprüche, **dadurch gekennzeichnet, dass** sie vier Drähte aufweist, die in Kontakt mit den Mänteln stehen, wobei die Wälzkörper in Kontakt mit den Drähten angeordnet sind.

13. Vorrichtung nach einem der Ansprüche 1 bis 11, **dadurch gekennzeichnet, dass** sie zwei Drähte, die in Kontakt mit einem Mantel stehen, und einen massiven Ring aufweist, der eine Laufbahn für die Wälzkörper umfasst.

14. Lenksäule mit einer Welle und zwei an der Welle angebrachten Wälzlagern, wobei mindestens eines der Wälzlager einem der vorhergehenden Ansprüche entspricht.
